# EUROPÄISCHE PATENTANMELDUNG

(11) **EP 1 911 512 A1**
(43) Veröffentlichungstag der Anmeldung: **16.04.2008**
(21) Anmeldenummer: 07090014.7
(22) Anmeldetag: 31.01.2007
(51) Int. Cl.: B01J 23/00, B01D 53/34, F01N 3/20, B01J 23/83, B01J 23/89, B01D 53/94

(54) **Verfahren und Vorrichtung zur katalytischen Oxidation und Reduktion von Gasen und Dämpfen mit kristallinen Verbindungen von Schwermetallen und Seltenen Erden**

(30) Priorität: 04.10.2006 DE 102006046884
(71) Anmelder: Koch, Christian, 96155 Buttenheim (DE)
(72) Erfinder: Koch, Christian, Dr., 96155 Buttenheim (DE); Koch, Ludwig-Christian, 90765 Fürth (DE)
(74) Vertreter: Kayser, Christoph

(57) **Zusammenfassung**

Die Erfindung beschreibt die Herstellung eines Katalysators zum Einsatz in der Oxydation und selektiven Reduktion mit Eigenschaften, die der katalytischen Eigenschaft der Edelmetallkatalysatoren ähneln, durch die Bildung einer Kristalloberfläche auf Katalysatorträgern aus einem mehrstufig hergestellten Synthesekristall derElemente der Seltenen Erden und der Metallkomponenten Kobalt und/oder Lanthan.

## Beschreibung

Die Erfindung beschreibt das Verfahren zur Herstellung solcher Katalysatoren und die Verwendung in katalytischen Reaktionssystemen als Ersatz für Platinkatalysatoren und Redoxsysteme, wie beispielsweise die DeNOₓ-Synthese.

Bekannt sind solche Katalysatoren als Waben- oder Schüttschichtkatalysatoren aus der DE 198 00 420 A1 bzw. der US-A-4,707,341. Dabei werden wässrige Lösungen aus einer ersten Komponente aus einer Verbindung mit Lanthan, Cer und Kobalt, einer zweiten Komponente Platin, einer dritten Komponente Rhodium sowie einer vierten Komponente aus einem Wash-coat aus Aluminiumoxid, Titandioxid und Oxalsäure auf den Katalysator aufgebracht.

Nachteil dieser Katalysatoren ist die geringe Oberfläche der aktiven Substanz, die nur durch die zusätzliche Verwendung von Platin und Rhodium auf eine ausreichende katalytische Wirkung ergänzt wird. Damit wirken die Verbindungen aus Lanthan, Cer und Kobalt nur als verbesserte Oberfläche für das Platin und ermöglichen eine erhöhte Lebensdauer.

Überraschenderweise wurde nun gefunden, dass der Anteil an Platin fast vollständig substituiert, die Lebensdauer erhöht und die katalytische Wirkung wesentlich verbessert wird, wenn die Wirksubstanz aus Seltenen Erden und Kobalt mehrstufig kristallisiert wird. Dabei werden zwar auch die Substanzen Kobalt und Mangan und die Seltenen Erden Lanthan, Cer und Yttrium verwendet, jedoch in einem speziellen mehrstufigen Prozess zu Kristallen mit einem Durchmesser von 1 bis 0,1 µm und einer Länge von 100 bis 100.000 µm umgeformt.

### Nach dem erfinderischen Verfahren geschieht dies in den folgenden Stufen:

In entionisiertes Wasser werden die Salze der Seltenen Erden Lanthan, Cer und/oder Yttrium und die Salze der Metalle Kobalt und/oder Mangan im stöchiometrischen Verhältnis eingegeben bis eine 20 bis 60%ige Lösung entsteht. Das stöchiometrische Verhältnis ist dabei die Menge entsprechend dem Atomgewicht der beteiligten Massen der Reaktionspartner zu den Komplexen LaCoO₃, wobei La durch Cer und Yttrium ersetzt werden kann und Kobalt durch Mangan ersetzt werden kann. Als Salze werden die Nitrate, Karbonate und Acetate verwendet.

Der anschließende Brennvorgang benötigt eine Temperatur zwischen 500 und 761°C. Die maximale Temperatur ist vorgegeben, da diese Temperatur der Beginn einer weiteren Umkristallisierung ist, die vermieden werden muss. Das bei dem Erwärmungsvorgang entstehende Grobkristallgemisch wird wieder in einer 20 bis 60% Oxalsäure gelöst, bis der Bodensatz gering ist. Dieser wird aus der Lösung durch Umdekantieren entfernt. Die reine bodensatzfreie Lösung wird wieder auf die Brenntemperatur von 500 bis 600°C erhitzt und so zu feinem Pulver in Kristallform aufgearbeitet.

Nun wird eine weitere Oxalsäurelösung in Wasser mit 20 bis 40% Oxalsäure angerührt. In diese Lösung wird nun molekular feines Aluminiumoxid (Condea) 10% und feines Bayertitan oder gleichwertiges TiO₂ eingerührt. Das oben hergestellte Kristallpulver wird nun als letztes in die Lösung eingegeben. Die so entstandene Mischung wird intensiv, eventuell unter Zugabe von weiterem Wasser, zu einer dünnflüssigen Suspension aufgerührt.

Mit dieser Suspension erfolgt die eigentliche Katalysatorherstellung, indem die Trägerkörper, die eine Waben- oder Schüttschichtstruktur haben, in diese Suspension eingetaucht werden. Dabei ist es notwendig, dass die Körper vollständig untergetaucht werden, da sonst die Fusionseffekte den Katalysator ungleichmäßig auf der Oberfläche verteilen.

Die so hergestellten Nasskatalysatoren werden in einem "Kalzinierofen" bei 450 bis 550°C über mindestens 12 Stunden zu fertigen Katalysatoren aufgearbeitet. Zum verbesserten "Anspringen" der katalytischen Reaktion wird nach dem Brennprozess der Katalysator in eine Platin- oder Palladiumnitratlösung getaucht, so dass eine Konzentration an Platin oder Palladium von 0,1 bis 0,5 g/l Katalysator entsteht. Der so entstandene Fertigkatalysator wird ebenfalls noch einmal über 6 Stunden bei 450 bis 550°C kalziniert.

Die entstandenen Katalysatorkörper haben auf der Oberfläche eine gleichmäßige Kristallstruktur bzw. Kristallschicht, die in einem Mikroskop oder Rasterelektronenmikroskop zu sehen ist. Die im Rasterelektronenmikroskop (REM) ermittelbaren Konzentrationen zwischen den Seltenen Erden und Kobalt bzw. Mangan dürfen dabei das stöchiometrische Verhältnis an keinem Punkt unterschreiten. Immer müssen die Seltenen Erden mindestens stöchiometrisch oder überstöchiometrisch vorhanden sein. Ebenso muss die Verteilung des Platins bzw. Palladiums mindestens zu 30% auf den Kristallen sein und darf nicht ausschließlich an das Condea oder Titandioxid gebunden sein. Dieses wird mit dem REM mit der Laseranalyse der Kristalloberfläche analysiert.

In einem speziellen Ausführungsbeispiel wird die Erfindung näher erläutert. Das Ausführungsbeispiel zeigt die Erzeugung der erfindungsgemäßen Kristallkatalysatoren, d.h., Katalysatoren mit aufgebrachten Kristallschichten mit platinähnlichen Eigenschaften, anhand der Ausgangsstoffe der Seltenen Erden, Lanthan und Cer und des Schwermetall-Reaktionspartners Kobalt. Ziel des Ausführungsbeispiels ist es, den Komplex La_{0,9}Ce_{0,1}CoO₃ so herzustellen, dass kein freies Kobalt zur Zersetzung des Kristalles verfügbar ist und der Komplex vollständig neutral und ungiftig ist.

Dazu werden die Komponenten Lanthanacetat, La(CH₃COO)₃ x n H₂O, mit einem Gehalt von La₂O₃ 40%, Ceracetat, Ce(CH₃COO₃ x n H₂O mit einem Cergehalt an CeO₂ von 45% und Kobaltacetat Co(CH₃COO)₂ x 4 H₂O mit einem Gehalt an Kobalt von 24% in folgender Weise gemischt:

430 g Lanthanacetat + 45 g Ceracetat + 250 g Kobaltacetat werden in ein Bad mit 3 Liter entionisiertem Wasser aufgelöst eingerührt. Die Lösung wird unter Umrühren auf Temperaturen von nahe 100°C gebracht und anschließend ohne Umrühren auf 600°C erhitzt. Dabei reagieren die Substanzen zu einem schwarzen Pulver, welches den Komplex La_{0,9}Ce_{0,1}CoO₃ zu 90% und 10% ein Gemisch von La_{0,9}Ce_{0,1} enthält.

Dieser Komplex ist durch den Überschuss an La_{0,9}Ce_{0,1} stabil und verhindert, dass überschüssiges Kobalt sowohl hinsichtlich der Schwermetallbelastung als auch hinsichtlich der thermischen Zerlegung des Komplexes aktiv werden kann. Somit ist der Überschuss an Komplexen der Seltenen Erden ein wichtiges Merkmal des entstandenen Katalysatorkristalles. Es entstehen 300 g schwarzes Katalysatorpulver.

Dieses Katalysatorpulver wird erneut unter Erhitzen in einer Lösung von 300 g Oxalsäure und 3 Liter Wasser aufgelöst und wieder auf 500°C erhitzt, wobei ein ähnliches schwarzes Pulver entsteht, das jedoch unter dem Rasterelektronenmikroskop eine viel feinere Kristallstruktur und eine viel gleichmäßigere Elementverteilung aufweist. Im Falle der Zugabe von anderen Seltenen Erden und Mangan wird der Prozess noch ein drittes Mal wiederholt bis die vollständige Homogenität erreicht ist.

Das so entstandene schwarze Katalysatorpulver von 300 g Nadelkristall-Material, auch Perowskit genannt, wird nun wieder in 4 Liter entionisiertem Wasser mit 105 g Oxalsäure, 100 g Condea und 50 g Bayertitan, einem feinkörnigen Titanoxid, verrührt. Die zu tränkenden Keramikkörper, die durch Tauchen in diese Lösung zu Katalysatoren aufbereitet werden sollen, werden vorher getrocknet.

Als Katalysatorkörper eignen sich ein Wabenkörper, gewickelte Metallkörper mit durchgängigen Kanälen und poröse Keramikstrangpresslinge. Als Keramikmaterial für diese Körper haben sich die Materialien Magnesium-Aluminium-Silikat, das Cordierit, SiO₂-Körper, Titan-Wolfram-Oxid-Waben und Aluminiumoxid herausgestellt, wobei die Materialien Magnesium-Aluminium-Silikat, Cordierit, SiO₂-Körper, Titan-Wolfram-Oxid-Waben besonders dehnungsunempfindlich und damit besonders geeignet sind.

Die Katalysatorträger werden so in die katalytische Lösung getaucht, dass die porösen Körper gleichmäßig beschichtet werden, das heißt, sie müssen vollständig und schnell untergetaucht werden, um möglichst wenig kapillaren Flüssigkeitstransport innerhalb der Keramik zuzulassen. Wird der Körper zu langsam oder einseitig getaucht, saugt die Kapillarkraft des Keramikkörpers die Flüssigkeit auf und die katalytische Substanz wird gefiltert, so dass die Beschichtung ungleichmäßig erfolgt.

Nach dem Beschichten durch Tauchen wird überschüssige Flüssigkeit abgetrennt. Das erfolgt dadurch, dass der Körper auf eine mit einem Sieb abgedeckte Unterlage gestellt wird, die die überschüssige Flüssigkeit aufnimmt. Nach vollständigem Absetzen der Flüssigkeit am unteren Ende der Wabenkörper werden diese durch Abschütteln oder leichtes Ausblasen von der am unteren Ende befindlichen Flüssigkeit so befreit, dass die Bohrungen der Wabenkörper frei sind.

Nach der Beschichtung erfolgt die Aktivierung der katalytischen Beschichtung dadurch, dass diese Körper bei einer Temperatur von 500°C über einen Zeitraum von 2 bis 20 Stunden kalziniert werden, das heißt, die Oxalsäure ist dann aus dem Wabenkörper vollständig herausgebrannt. Die Brennzeit hängt von der Größe der Wabenkörper ab. Je größer der Wabenkörper ist, um so länger ist die Brennzeit.

Der so mit einer Kristallschicht versehene Wabenkörper ist für die katalytische Wirksamkeit noch nicht vollständig. Erfindungsgemäß wurde festgestellt, dass kleine Mengen an Edelmetallen, die nachträglich in einem separaten Beschichtungsvorgang aufgebracht werden, eine besondere Wirksamkeit entfalten. Das liegt daran, dass die Edelmetalle vorwiegend auf den Kristallen des La_{0,9}Ce_{0,1}CoO₃ und La_{0,9}Ce_{0,1} abgeschieden werden. Das geschieht durch Tränken mit einer Edelmetalllösung, wie beispielsweise Platinnitrat, in einer solchen Konzentration, dass auf 1 Liter entionisiertes Wasser 1 Gramm Platin aufgelöst wird, und ein anschließendes Brennen der Keramikkörper ebenfalls bei 500°C.

Dadurch entsteht gegenüber den üblichen Edelmetallbeschichtungen eine sehr stabile Positionierung der Edelmetalle, die eine viel höhere Lebensdauer erreichen, als bei der Beschichtung mit Condea und Bayertitan. Darüber hinaus bringt das Edelmetall die Beschichtung von La_{0,9}Ce_{0,1}CoO₃ und Lao_{0,9}Ce_{0,1} als "Zündmetall" schneller zu einer vollen katalytischen Aktivität, das heißt, die katalytische Aktivität des Platins oder anderer Edelmetalle "zündet" die katalytische Aktivität des Lanthan-Cer-Cobaltits. Diese Wechselwirkung ergibt sich auch bei Katalysatorgiften, welche die beiden katalytischen Systeme La_{0,9}Ce_{0,1}CoO₃ und Edelmetalle unterschiedlich vergiften. Das jeweils weniger vergiftete System aktiviert das andere System.

Als Ergebnis der erfinderischen Beschichtung ergeben sich folgende Vorteile, die auch die Wirtschaftlichkeit des Systems begründen. Die vergleichbare Edelmetallbeschichtung gleicher Aktivität braucht eine 20 Mal höhere Edelmetallmenge, hat nur ca. 5% der Lebensdauer im Vergleich zu der erfinderischen Beschichtung, und die Katalysatorgifte haben auf die erfinderische Beschichtung einen reduzierten Einfluss.

Darüber hinaus ergibt die erfinderische Beschichtung neben der katalytischen Oxidation von Kohlenwasserstoffen noch einen völlig neuen, überraschenden Effekt. Diese Wabenkörper sind in der Lage, selektiv Stickoxide aus Abgasen zu entfernen, das heißt, die Stickoxide werden auch bei sauerstoffhaltigen Abgasen reduziert und der übrige Sauerstoff reagiert nicht mit der Lanthan-Cer-Cobaltit-Oberfläche. Der Prozess geht allerdings nur so lange, bis die höchste Oxidationsstufe des Katalysators erreicht ist. Danach muss der Katalysator wieder regeneriert werden, was nach dem heutigen Stand der Technik mit CO und H₂ möglich ist.

## Patentansprüche

1. Verfahren zur Herstellung von Katalysatoren für die Oxidation von gas- und dampfförmigen Kohlenwasserstoffen (VOC) und die katalytische, selektive Reduktion von DeNOₓ,
**dadurch gekennzeichnet,**
**dass** mit den Verbindungen der Seltenen Erden und der Schwermetalle Kobalt und Mangan in einem mehrstufigen Kristallisationsprozess eine Kristallschicht auf Trägerkörpern als eine katalytisch aktive Substanz ausgebildet wird.

2. Verfahren nach Anspruch 1,
**dadurch gekennzeichnet,**
**dass** die Reaktionspartner Seltene Erden und Schwermetalle, Kobalt und/oder Mangan im überstöchiometrischen Verhältnis gebildet werden, so dass sich in der Kristallschicht ein Überschuss an Seltenen Erden ergibt.

3. Verfahren nach den Ansprüchen 1 oder 2,
**dadurch gekennzeichnet,**
**dass** die Seltenen Erden Lanthan, Cer und Yttrium gemeinsam oder einzeln verwendet werden.

4. Verfahren nach den Ansprüchen 1 oder 2,
**dadurch gekennzeichnet,**
**dass** als Schwermetalle die Metalle Kobalt und/oder Mangan verwendet werden.

5. Verfahren nach den Ansprüchen 1 oder 2,
**dadurch gekennzeichnet,**
**dass** die Ausgangssubstanzen Salze sind, die in Wasser und Oxalsäure gelöst werden.

6. Verfahren nach den Ansprüchen 1 oder 2,
**dadurch gekennzeichnet,**
**dass** die Bildung des Komplexes aus Seltenen Erden und Schwermetallen durch Erwärmen auf 500 bis 761°C der Mischung erfolgt und dieser Vorgang durch Lösen in Oxalsäurewasser wenigstens einmal wiederholt wird.

7. Verfahren nach den Ansprüchen 1, 2 oder 6,
**dadurch gekennzeichnet,**
**dass** die katalytisch aktive Substanz in einer Oxalsäuremischung mit Zugabe von molekularem Aluminiumoxid, Condea und Titanoxid, Bayertitan zu einer Tränklösung aufgerührt wird.

8. Verfahren nach den Ansprüchen 1 oder 2,
**dadurch gekennzeichnet,**
**dass** der fertig beschichtete Katalysator durch Erwärmen auf 500°C aktiviert wird.

9. Verfahren nach den Ansprüchen 1, 2, 6 oder 8,
**dadurch gekennzeichnet,**
**dass** der fertige Katalysator noch einmal in einer Edelmetalllösung getränkt und anschließend auf 500°C erwärmt wird, so dass die Edelmetallkonzentration auf dem Körper zwischen 0,05 und 0,5 g/l beträgt.
